# EUROPEAN PATENT APPLICATION

(11) **EP 3 598 791 A1**
(43) Date of publication of application: **22.01.2020**
(21) Application number: 19194339.8
(22) Date of filing: 09.09.2014
(51) Int. Cl.: H04W 28/02, H04W 4/70

(54) **COMMUNICATION SYSTEM, BASE STATION, COMMUNICATION METHOD, AND NON-TRANSITORY COMPUTER READABLE MEDIUM STORING PROGRAM**

(30) Priority: 27.09.2013 JP 2013202034
(62) Divisional of application: 14780908.1
(71) Applicant: NEC Corporation, Tokyo 108-8001 (JP)
(72) Inventor: ONISHI, Koji, Minato-ku, Tokyo 108-8001 (JP); TAMURA, Toshiyuki, Minato-ku, Tokyo 108-8001 (JP)
(74) Representative: MacDougall, Alan John Shaw

(57) **Abstract**

An object is to provide a communication system, a base station, a communication method, and a program capable of eliminating an effect caused by a sharp increase in the amount of traffic by a specific group of communication terminals on the quality of the other communication terminals. A communication system according to the present invention includes a communication terminal (40), and a node device (13) that selects a gateway device (11) that performs data communication with the communication terminal (40). Further the communication system includes a base station (30) that selects the node device (13) based on an identifier included in a connection request message transmitted from the communication terminal (40).

## Description

### Technical Field

The present invention relates to a communication system, in particular, a communication system including a plurality of core network systems.

### Background Art

A communication system managed by a telecommunications carrier manages the movements of communication terminals and includes a core network(s) that includes data relay devices and the like. Further, the communication system managed by a telecommunications carrier prepares a gateway device for each company (i.e., each corporate client) as a corporate service and thereby connects to a network managed by each company through the gateway device. The gateway devices are disposed inside the core network. A communication terminal can connect to the network of the company to which that communication terminal belongs through the gateway device disposed inside the communication system managed by the telecommunications carrier.

In recent years, a connection(s) of an MTC (Machine Type Communication) terminal(s) to a communication system has been studied. The MTC terminal is a terminal that transmits/receives sensor information, commodity management information and so on, and the amount of communication per terminal is small. A company or the like that introduces MTC terminals collects information pieces transmitted from a plurality of MTC terminals and analyzes the collected information. The company or the like that introduces MTC terminals expands their services by using the analysis result. In such cases, each company connects a number of MTC terminals to a communication system in order to collect a large amount of information.

Note that Patent Literature 1 discloses a system in which a sensor(s), a mobile information terminal(s), and an application server cooperate with each other so that a service is provided to the mobile information terminal(s). Specifically, the mobile information terminal acquires a plurality of sensor information pieces. Further, the mobile information terminal transmits the acquired sensor information pieces to the application server. Then, the application server creates advice information based on the sensor information transmitted from the mobile information terminal and transmits the created advice information to the mobile information terminal. In this way, the mobile information terminal can receive an advice service based on the sensor information.

### Citation List

### Patent Literature

PL: Japanese Unexamined Patent Application Publication No. 2010-165112

### Non-Patent Literature 1

NPL1: 3GPP Technical Specification, TS 36.413 V11.5.0 (2013-09), clause 8.7.3

### Summary of Invention

### Technical Problem

However, when a number of sensors each having a communication function, a number of MTC terminals or the like are connected to a communication system managed by a telecommunications carrier, the following problem occurs. When a number of sensors, a number of MTC terminals or the like update their software all at once, the amount of traffic in the communication system sharply increases. Further, in addition to the software updating, when MTC terminals perform communication all at once, the amount of traffic in the communication system increases with the increase in the number of the MTC terminals performing communication, though the amount of communication per terminal is small. In addition to the MTC terminals and the like, smart phones, mobile phones or the like are also connected to the communication system. Therefore, there is a problem that when the amount of traffic by the MTC terminals and the like sharply increases, it could cause adverse effects such as data delays on communication using smart phones, mobile phones or the like due to the network congestion.

An object of the present invention is to provide a communication system, a base station, a communication method, and a program capable of eliminating an effect caused by a sharp increase in the amount of traffic by a specific group of communication terminals on the quality of the other communication terminals.

### Solution to Problem

A communication system according to a first aspect of the present invention includes: a communication terminal; a node device that selects a gateway device that performs data communication with the communication terminal; and a base station that selects the node device based on an identifier included in a connection request message transmitted from the communication terminal.

A base station according to a second aspect of the present invention includes: a communication unit that receives a connection request message transmitted from a communication terminal; and a determination unit that selects a node device from among a plurality of node devices based on an identifier included in the connection request message, the selected node device being to select a gateway device to which the communication terminal connects.

A communication method according to a third aspect of the present invention includes: receiving a connection request message transmitted from a communication terminal; and selecting a node device from among a plurality of node devices based on an identifier included in the connection request message, the selected node device being to select a gateway device to which the communication terminal connects.

A program according to a fourth aspect of the present invention causes a computer to execute: receiving a connection request message transmitted from a communication terminal; and selecting a node device from among a plurality of node devices based on an identifier included in the connection request message, the selected node device being to select a gateway device to which the communication terminal connects.

### Advantageous Effects of Invention

According to the present invention, it is possible to provide a communication system, a base station, a communication method, and a program capable of eliminating an effect caused by a sharp increase in the amount of traffic by a specific group of communication terminals on the quality of the other communication terminals.

### Brief Description of Drawings

Fig. 1 is a configuration diagram of a communication system according to a first exemplary embodiment;
Fig. 2 is a configuration diagram of a base station according to a second exemplary embodiment;
Fig. 3 is a configuration diagram of a core network system according to the second exemplary embodiment;
Fig. 4 shows a service identifier according to the second exemplary embodiment;
Fig. 5 shows an outline of a selection process performed by an MME according to the second exemplary embodiment;
Fig. 6 shows a flow of a service identifier transmission process according to the second exemplary embodiment;
Fig. 7 shows a flow of a service identifier acquisition process according to the second exemplary embodiment;
Fig. 8 shows a flow of a connection request message transfer process according to the second exemplary embodiment;
Fig. 9 shows a specific example of a connection request message according to the second exemplary embodiment;
Fig. 10 is a configuration diagram of a communication system according to a third exemplary embodiment;
Fig. 11 shows a flow of an MME selection process according to the third exemplary embodiment; and
Fig. 12 is a configuration diagram of a core network system according to a fourth exemplary embodiment.

### Description of Embodiments

### (First exemplary embodiment)

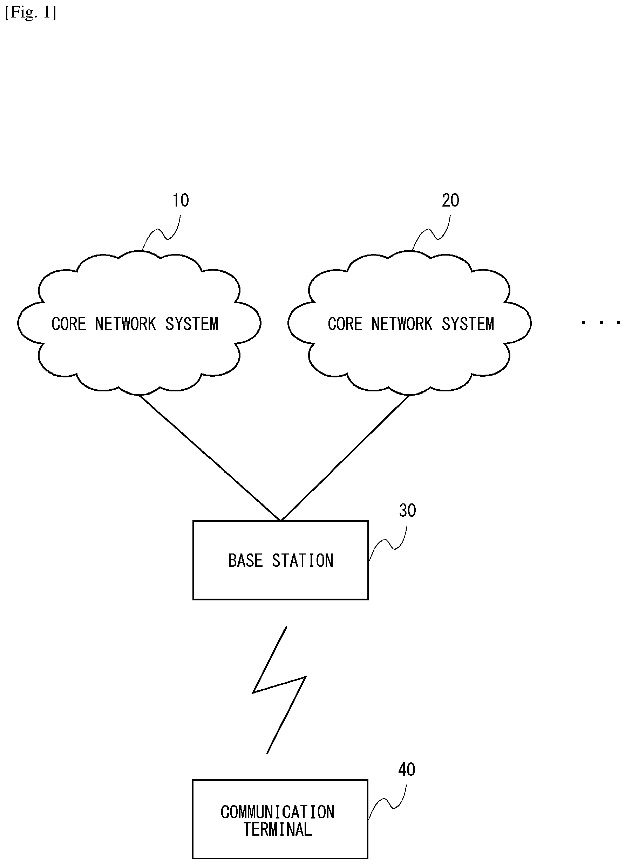

Exemplary embodiments according to the present invention are explained hereinafter with reference to the drawings. A configuration example of a communication system according to a first exemplary embodiment of the present invention is explained with reference to Fig. 1. A communication system shown in Fig. 1 includes a core network system 10, a core network system 20, a base station 30, and a communication terminal 40.

Each of the core network systems 10 and 20 is a core network system for which communication terminals 40 allowed to connect thereto are restricted. For example, when each of the core network systems 10 and 20 is a core network assigned to a respective company (i.e., a respective corporate client), the communication terminals 40 allowed to connect to that core network may be communication terminals owned by users belonging to that company. That is, the communication terminal 40 may be configured so that a communication terminal 40 can connect only to a core network system assigning to a company to which its user belong and cannot connect to core network systems assigned to the other companies.

Further, the core network system 10 or 20 may be assigned to one company or a plurality of companies. That is, a plurality of companies may share one core network system. Further, for example, one core network system may be assigned to each service to be provided. When a service using MTC terminals is provided, a core network system may be used for connection with specific MTC terminals. Further, for example, in a region in which traffic is small or the like, a plurality of companies may share one core network system.

The core network systems 10 and 20 include a plurality of node devices. The plurality of node devices are used to manage the communication terminal 40 or to relay data.

Each of the core network systems 10 and 20 is assigned a service identifier indicating a corporate service that can be accommodated in that core network system. The corporate service is a service that is provided inside the core network system by an ordinary company or a telecommunications carrier, and in the core network system, the corporate service is identified by using a service identifier. Alternatively, the corporate service may be a service that is provided in an external network connected to the core network system. Service identifiers assigned to their respective core network systems are different from one core network system to another. Each of the core network systems 10 and 20 transmits the service identifier assigned to the own system to the base station 30.

The communication terminal 40 may be a mobile phone terminal, a smart phone terminal, a tablet communication terminal, a personal computer having a communication function, or the like. Alternatively, the communication terminal 40 may be an MTC terminal, a compact device having a communication function, or the like.

The base station 30 is shared by the core network systems 10 and 20. The base station 30 is disposed inside a mobile communication network and communicates with the communication terminal 40 through a wireless line. Further, the base station 30 communicates with a node device included in the core network system 10 or 20 through a wired line or a wireless line. Further, the mobile communication network is a network that includes the core network systems 10 and 20 and the base station 30 and is managed by one telecommunications carrier.

The base station 30 receives a connection request message for the core network system 10 or 20 transmitted from the communication terminal 40. For the communication terminal 40, a core network system to which it can connect is determined in advance. Assume that, for example, the core network system to which the communication terminal 40 can connect is the core network system 10. In such a case, the communication terminal 40 transmits a connection request message including information for identifying the core network system 10. The identification information included in the connection request message may be a service identifier indicating a cooperate service or may be other identifiers.

When the base station 30 is requested to connect to the core network system 10 by the communication terminal 40, the base station 30 transmits the connection request message transmitted from the communication terminal 40 to the core network system 10 by using the service identifier transmitted from the core network system 10. The "using the service identifier" means that the base station 30 selects a destination core network system to which the connection request message should be transmitted by specifying the service identifier.

When a service identifier is included in the connection request message, the base station 30 may transmit the connection request message to a core network system to which that service identifier is assigned. When an identifier different from the service identifier is included in the connection request message, the base station 30 may extract a service identifier associated with that identifier and transmit the connection request message to a core network system to which the extracted service identifier is assigned.

As explained above, by using the communication system shown in Fig. 1, the base station 30 can identify a core network system to which the base station 30 should connect from among a plurality of core network systems by using a service identifier assigned to a respective one of the core network systems. The base station 30 can select a core network system to which the communication terminal 40 can connect by using a service identifier and transmit a connection request message transmitted from the communication terminal 40 to the selected core network system. Further, the base station 30 can also transmit/receive data relating to the communication terminal 40 that is generated after the above-described connection process through the selected core network system.

As described above, each of a plurality of core network systems disposed inside the mobile communication system is assigned a service identifier indicating a corporate service that can be accommodated in that core network system. As a result, the base station 30 can determine, for each communication terminal 40, the destination of a connection request message transmitted from that communication terminal 40. Since the base station 30 can transfer communication data relating to a specific group of communication terminals to a specific core network system, the base station 30 can prevent the transfer of communication data from having an adverse effect on the other core network systems and thereby deteriorating their communication quality even when the amount of communication data relating to the specific group of communication terminals sharply increases.

### (Second exemplary embodiment)

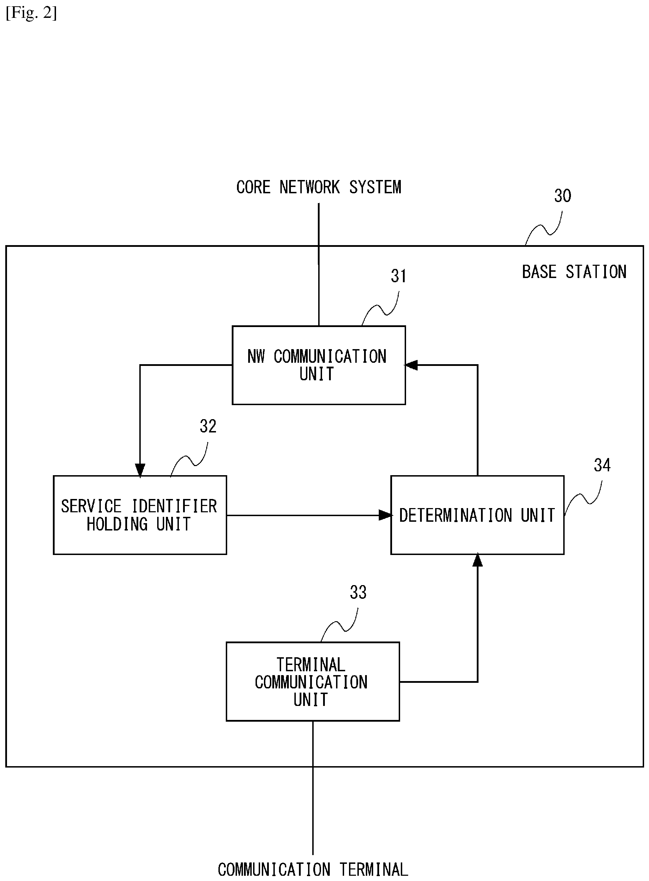

Next, a detailed configuration example of a base station 30 according to a second exemplary embodiment of the present invention is explained with reference to Fig. 2. The base station 30 includes a network (NW) communication unit 31, a service identifier holding unit 32, a terminal communication unit 33, and a determination unit 34.

The NW communication unit 31 communicates with a node device disposed inside a core network system. The NW communication unit 31 may be used as an interface for communicating with the node device. The NW communication unit 31 receives a service identifier transmitted from the node device. The service identifier is an identifier indicating a corporate service that can be accommodated in the core network system in which the node device is disposed. The NW communication unit 31 outputs the received service identifier to the service identifier holding unit 32.

The service identifier holding unit 32 associates the service identifier output from the NW communication unit 31 with the core network system and manages (or stores) the service identifier in the associated state. The service identifier holding unit 32 may be a memory disposed inside the base station 30 or an external memory connected to the base station 30. When the NW communication unit 31 communicates with a plurality of core network systems and thereby receives a plurality of service identifiers, the service identifier holding unit 32 holds the plurality of service identifiers.

The terminal communication unit 33 communicates with the communication terminal 40. The terminal communication unit 33 may be used as an interface for communicating with the communication terminal 40. The terminal communication unit 33 performs wireless communication with the communication terminal 40 by using a predetermined wireless communication scheme. The predetermined wireless communication scheme may be, for example, LTE (Long Term Evolution) specified in 3GPP (3rd Generation Partnership Project). The terminal communication unit 33 receives a connection request message transmitted from the communication terminal 40. The terminal communication unit 33 outputs the received connection request message to the determination unit 34. The communication terminal 40 can transmit/receive user data by connecting to the core network system through the base station 30. Therefore, the communication terminal 40 transmits a connection request message in order to connect to the core network system.

Examples of the user data include voice data, image data, and moving image data. Further, the user data may be referred to as "U-Plane (User-Plane) data". Meanwhile, the connection request message may be referred to as "control data". The control data may also be referred to as "C-Plane (Control-Plane) data". Specifically, the connection request message may be an Attach message or a TAU (Tracking Area Update) message specified in the 3GPP.

The determination unit 34 determines a core network system to which the connection request message output from the terminal communication unit 33 should be transmitted by using a service identifier set in that connection request message and a service identifier(s) held in the service identifier holding unit 32. The CPU or the like of a computer apparatus constituting the base station 30, for example, may be used as the determination unit 34.

Upon receiving the connection request message from the terminal communication unit 33, the determination unit 34 extracts a service identifier set in the connection request message. The service identifier set in the connection request message is used when the communication terminal 40 selects a core network system to which the communication terminal should connect. At this point, the determination unit 34 determines whether or not the same service identifier as the extracted service identifier is held in the service identifier holding unit 32. The determination unit 34 may acquire information representing a list of service identifiers held in the service identifier holding unit 32 from the service identifier holding unit 32 and thereby determine whether or not the service identifier set in the connection request message is held in the service identifier holding unit 32.

When the determination unit 34 determines that the same service identifier as the extracted service identifier is held in the service identifier holding unit 32, the determination unit 34 transmits the connection request message to a core network system associated with the service identifier through the NW communication unit 31. The fact that the same service identifier as the extracted service identifier is held in the service identifier holding unit 32 indicates that the NW communication unit 31 can communicate with the core network system to which that service identifier is assigned. On the other hand, when the determination unit 34 determines that the same service identifier as the extracted service identifier is not held in the service identifier holding unit 32, the determination unit 34 may transmits the connection request message to a predetermined core network system through the NW communication unit 31.

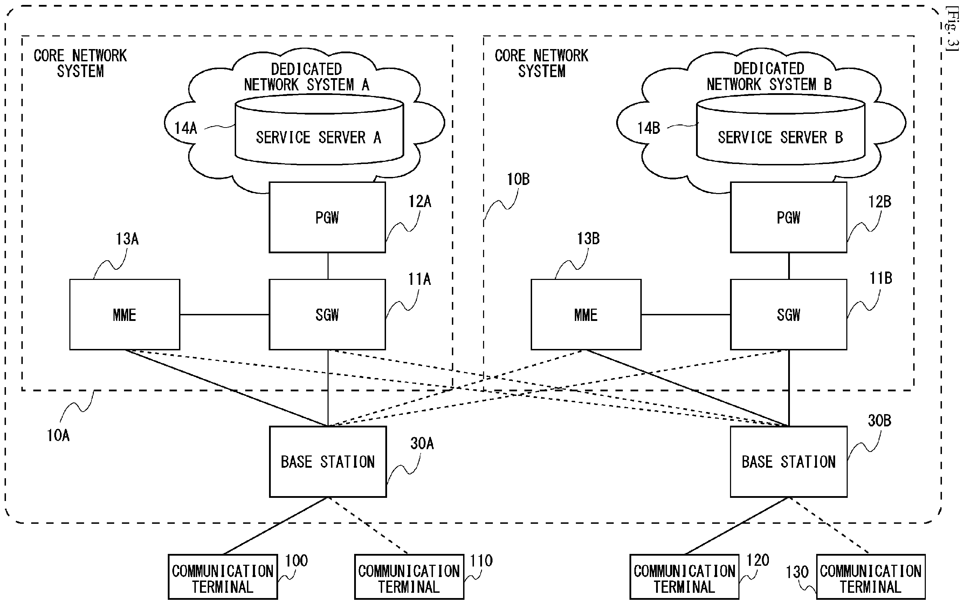

Next, configuration examples of core network systems 10A and 10B according to the second exemplary embodiment of the present invention are explained with reference to Fig. 3. The core network system 10B has a similar configuration to that of the core network system 10A, and therefore its detailed explanation is omitted. Note that the core network systems 10A and 10B may be operated by one company, or may be shared by a plurality of companies. For example, in the case of the LTE, each of the core network systems 10A and 10B is an EPC (Evolved Packet Core).

The core network system 10A includes an SGW (Serving GW) 11A, a PGW (Packet Data Network GW) 12A and an MME (Mobility Management Entity) 13A. Further, the PGW 12A is connected to a service server 14A installed in a dedicated network A. The SGW 11A, the PGW 12A, and the MME 13A are node devices specified in the 3GPP. Examples of the dedicated network include: networks operated by companies, ministries and agencies, and municipalities; intra-company LANs; and Ethernets (registered trademark). In this figure, the core network system 10A includes one SGW 11A, one PGW 12A, one MME 13A, and one service server 14A. However, the core network system 10A may include a plurality of SGWs 11A, a plurality of PGWs 12A, a plurality of MMEs 13A, and a plurality of service servers 14A.

Further, each node device in the core network system 10A may be provided as a VNF (Virtualized Network Function) by the telecommunications carrier. The VNF is virtualization of a network node in which a CPU(s), a memory(s), and so on of a physical machine(s) are shared by a plurality of companies or the like, and resources such as a virtual CPU and a virtual memory provided to each company can be dynamically changed.

The SGW 11A transmits user data transmitted from base stations 30A and 30B to the PGW 12A. Further, the SGW 11A transmits user data whose destination is a communication terminal 100 to the base station 30A and transmits user data whose destination is a communication terminal 130 to the base station 30B. Fig. 3 shows that the communication terminals 100 and 130 communicate with the core network system 10A, and communication terminals 110 and 120 communicate with the core network system 10B.

Similarly to the SGW 11A, the PGW 12A transmits or receive user data. The PGW 12A communicates with the service server 14A disposed in the dedicated network A. That is, the PGW 12A is a gateway device disposed on the boundary with the dedicated network A. For example, the PGW 12A may connect to a corporate service server or the like.

The MME 13A selects the SGW 11A that transmits/receive user data relating to the communication terminal 100, which is connected to the MME 13A through the base station 30A, and user data relating to the communication terminal 130, which is connected to the MME 13A through the base station 30B. The MME 13A notifies the base stations 30A and 30B of information about the selected SGW 11A. As a result, for example, the base station 30A can transmit user data transmitted from the communication terminal 100 to the SGW 11A. Further, the base station 30A can receive data transmitted from the SGW 11A and transmit the received data to the communication terminal 100. The MME 13A selects the PGW 12A as well as the SGW 11A.

When there are a plurality of SGWs 11A in the core network system 10A, the MME 13A may take account of the load state of each of these SGWs 11A and thereby select a SGW 11A having a smaller (or smallest) load. Further, the MME 13A may select a SGW 11A according to other selection criteria.

The MME 13A holds a service identifier of a service that can be accommodated in the core network system 10A. Further, the MME 13A transmits the held service identifier to the base stations 30A and 30B. A case where the MME 13A is shared among a plurality of cooperate services, e.g., shared by a plurality of companies or the like is explained hereinafter.

For example, the MME 13A holds a plurality of service identifiers relating to a plurality of cooperate services for which the connection is allowed, and thereby is shared among the plurality of cooperate services and the like. In this case, the MME 13A notifies the base stations 30A and 30B of the plurality of service identifiers.

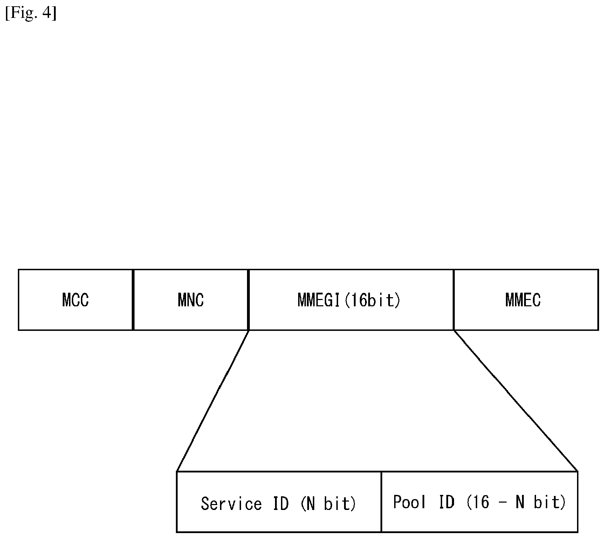

Next, a specific structure of a service identifier is explained with reference to Fig. 4. Fig. 4 shows an example in which a service identifier is set in a sub-field of an MMEGI (MME Group ID) field included in a GUMMEI (Globally Unique MME Identifier). The GUMMEI is identification information for an MME specified in the 3GPP. Alternatively, the service identifier may be handled as an independent information element in the mobile communication system.

The GUMMEI is identification information that the MME 13 transmits to the base station 30. The GUMMEI includes various information fields including fields for an MCC (Mobile Country Code), an MNC (Mobile Network Code), an MMEGI, and an MMEC (MME Code). In the MCC, a code for identifying a country is set. In the MNC, a code for identifying a telecommunications carrier is set. The MMEGI includes subfields in which a Service ID indicating a service identifier and a Pool ID are set.

The Pool ID is an identifier that is assigned to a plurality of MMEs in common. For example, a common Pool ID may be assigned to a plurality of MMEs disposed in a specific region. The plurality of MMEs to which a common Pool ID is assigned may be referred to a MME group. That is, different Pool IDs are assigned to a group of MMEs disposed in different regions, and the same Pool ID is assigned to a group of MMEs disposed in the same region.

The MMEGI consists of, for example, 16 bits. When N bits (N is an integer no less than zero) of the 16 bits are used for the Service ID, the remaining bits (16-N bits) are assigned to the Pool ID.

The Service ID is an identifier assigned to each corporate service. By assigning a Service ID to each core network system, a core network system used by a corporate service is specified. When one core network system is shared among a plurality of corporate services, Service IDs each of which is assigned to one of the plurality of corporate services are assigned to that core network system. That is, a core network system holds one or a plurality of Service IDs according to a corporate service(s) to which the connection is allowed.

The MMEC is an identifier for uniquely identifying each of a plurality of MMEs to which a common Pool ID is assigned.

The MME 13 transmits a GUMMEI with a Service ID set therein to the base station 30. The base station 30 extracts the Service ID from the GUMMEI transmitted from the MME 13, associates the extracted GUMMEI with a core network system, and manages (or stores) the GUMMEI in the associated state.

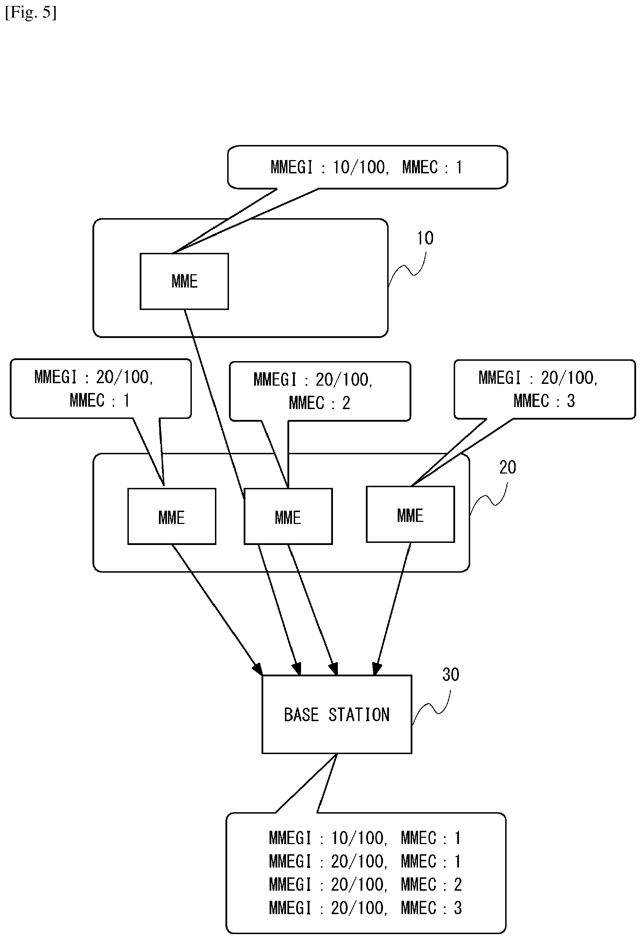

An outline of a process for selecting a core network system, i.e., for selecting an MME performed by the determination unit 34 of the base station 30 is explained hereinafter with reference to Fig. 5. In this figure, a core network system 10 includes one MME and a core network system 20 includes three MMEs. The core network system 10 includes an MME in which the MMEGI is 10/100 and the MMEC is 1. The MMEGI indicates "Service ID/Pool ID". Therefore, in the MME of the core network system 10, a value 10 is assigned to the Service ID and a value 100 is assigned to the Pool ID.

Similarly, the core network system 20 includes: an MME in which the MMEGI is 20/100 and the MMEC is 1; an MME in which the MMEGI is 20/100 and the MMEC is 2; and an MME in which the MMEGI is 20/100 and the MMEC is 3.

Each MME notifies the base station 30 of its MMEGI and MMEC. The base station 30 manages (or stores) the notified MMEGIs and MMECs.

Note that when the base station 30 receives a connection request message in which a value 20 is set as a service identifier from the communication terminal 40, the base station 30 selects one of the three MMEs in which a value 20 is set as the Service ID and transmits the connection request message to the selected MME. In this case, the base station 30 may select one of the three MMEs in which a value 20 is set as the Service ID by using Weight Factors. For example, the base station 30 may selects an MME in the ascending order of the MMECs. Alternatively, the base station 30 may acquire the processing load states of the MMEs in advance and select an MME having a smaller (or smallest) processing load. The base station 30 may select an MME by using other selection processes. Further, instead of using the configuration shown in Fig. 5, the communication system may be configured so that an MME is shared among a plurality of corporate services. For example, one MME accommodates "MMEGI: 10/100, MMEC: 1" and "MMEGI: 20/100, MMEC: 1".

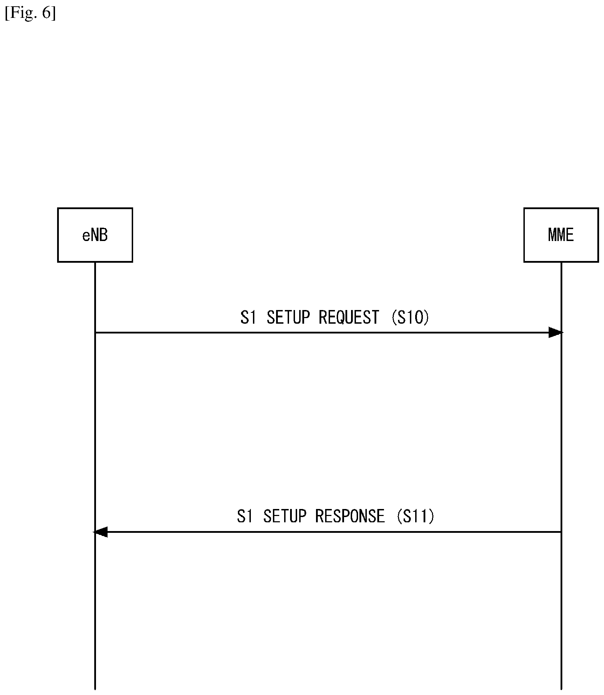

Next, a flow of a service identifier transmission process according to the second exemplary embodiment of the present invention is explained with reference to Fig. 6. This example is explained by using an eNB (evolved NodeB) specified in the 3GPP as the base station 30. The eNB is a base station in conformity with an LTE (Long Term Evolution) wireless scheme.

Firstly, the eNB transmits an S1 SETUP REQUEST message to an MME (S10). For example, upon power-on, the eNB transmits an S1 SETUP REQUEST message to an MME connected to that eNB. Note that the eNB may transmit an S1 SETUP REQUEST message to a plurality of MMEs.

Next, the MME transmits an S1 SETUP RESPONSE message to the eNB (S11). The MME sets a GUMMEI in the S1 SETUP RESPONSE message. That is, the MME notifies the eNB of a Service ID by transmitting an S1 SETUP RESPONSE message to the eNB. When a plurality of Service IDs are assigned to the MME, the MME notifies the eNB of the plurality of Service IDs. The plurality of Service IDs may be transmitted from the MME to the eNB in the form of a list of Service IDs. Note that the outline of the S1 SETUP REQUEST message and the S1 SETUP RESPONSE message shown in Fig. 6 is explained in Chapter 8.7.3 of TS36.413 V11.5.0 (2013-09), which is specifications in the 3GPP. In the communication system according to the second exemplary embodiment of the present invention, a Service ID is newly set in the S1 SETUP RESPONSE message specified in Chapter 8.7.3 of TS36.413 V11.5.0 (2013-09).

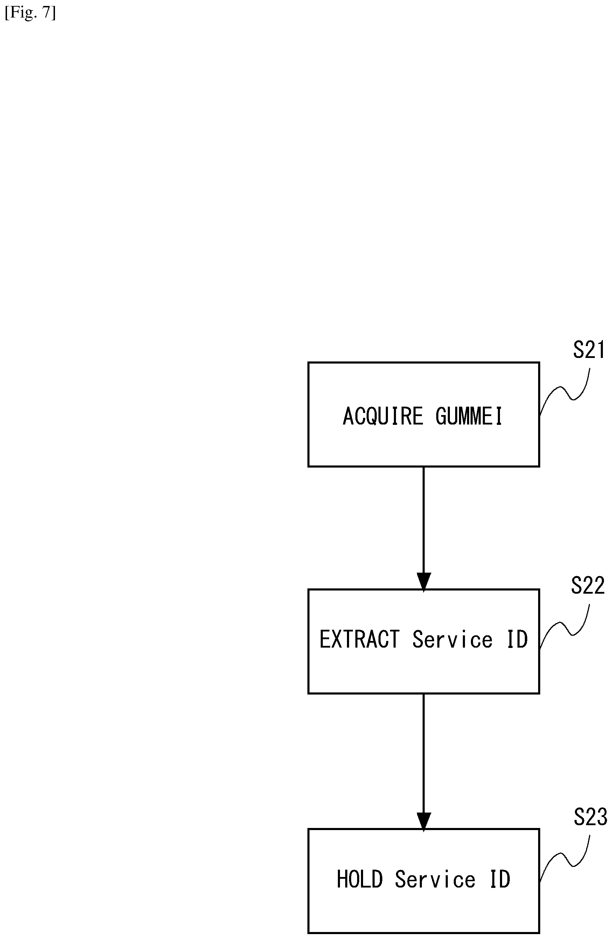

Next, a flow of a service identifier acquisition process according to the second exemplary embodiment of the present invention is explained with reference to Fig. 7. Firstly, the NW communication unit 31 of the eNB acquires a GUMMEI set in an S1 SETUP RESPONSE message (S21). Next, the service identifier holding unit 32 extracts a service identifier (Service ID) set in a sub-field of the MMEGI of the GUMMEI (S22). Next, the service identifier holding unit 32 holds the extracted Service ID (S23).

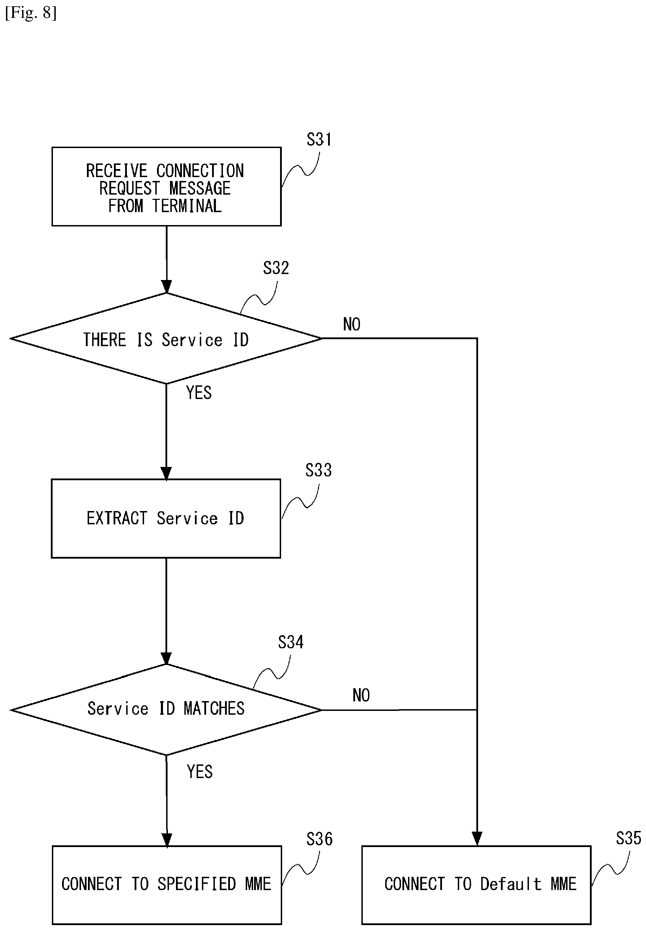

Next, a flow of a connection request message transfer process according to the second exemplary embodiment of the present invention is explained with reference to Fig. 8.

Firstly, the determination unit 34 receives a connection request message transmitted from the communication terminal 40 through the terminal communication unit 33 (S31). Next, the determination unit 34 determines whether or not a Service ID is set as a service identifier in the connection request message (S32). Next, when the determination unit 34 determines that a Service ID is set in the connection request message, the determination unit 34 extracts that Service ID (S33). Next, the determination unit 34 determines whether or not the extracted Service ID matches a Service ID held in the service identifier holding unit 32 (S34).

When the determination unit 34 determines that the Service ID included in the connection request message matches a Service ID held in the service identifier holding unit 32, the determination unit 34 transmits the connection request message to an MME of a core network system associated with the Service ID included in the connection request message (S36). When the determination unit 34 determines that the Service ID included in the connection request message does not match any Service ID held in the service identifier holding unit 32 or when the determination unit 34 determines that no Service ID is set in the connection request message transmitted from the communication terminal 40 in the step S32, the determination unit 34 transmits the connection request message to a predetermined Default MME (S35). Information about the Default MME may be stored in advance in a memory or the like disposed inside the base station 30, or may be set in an S1 SETUP RESPONSE or the like and sent to the base station 30.

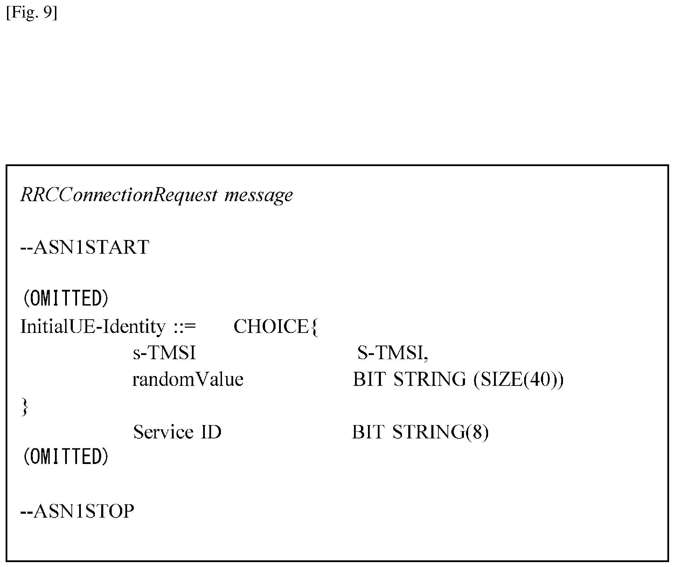

A specific example of a connection request message transmitted from the communication terminal 40 in the step S31 is explained hereinafter with reference to Fig. 9. Fig. 9 shows a state where a Service ID is set in an RRC Connection Request message transmitted from the communication terminal 40 to the eNB. In this way, the communication terminal 40 notifies the eNB of the Service ID. In Fig. 9, an example case where the Service ID has an 8-bit length is shown.

As explained above, by using the communication system according to the second exemplary embodiment of the present invention, the base station (eNB) can connect a communication terminal for which a specific service identifier is set with a specific core network system. As a result, data relating to the specific communication terminal is transmitted through the specific core network system. Therefore, no data relating to the specific communication terminal flows into the other core network systems. Accordingly, even when the amount of data relating to the specific communication terminal increases, the other core network systems receive no adverse effect therefrom.

Further, since the service identifier is set in a sub-field of the MMEGI of the GUMMEI, which has been already specified in the 3GPP, the above-described configuration can be implemented without substantially changing the structure of existing messages.

Further, by assigning a core network system to each corporate service, a mobile telecommunications carrier can design a network while estimating the amount of traffic only for ordinary users such as users of smart phones and users of mobile phone terminals. That is, a mobile telecommunications carrier can design a mobile communication network without taking account of the amount of traffic relating to communication terminals and the like that connect to core network systems each of which is assigned to a respective one of corporate services.

Further, each company can design a core network system according to the characteristics of communication terminals that connect to that core network system. For example, when only communication terminals that do not move connect to a core network system, the cost for the core network system can be reduced by constructing a core network system in which the movement management function is omitted. Further, when a number of communication terminals that frequently move connect to a core network system, the company can construct a core network system having high quality by reinforcing the MME, the SGW, and the PGW.

### (Third exemplary embodiment)

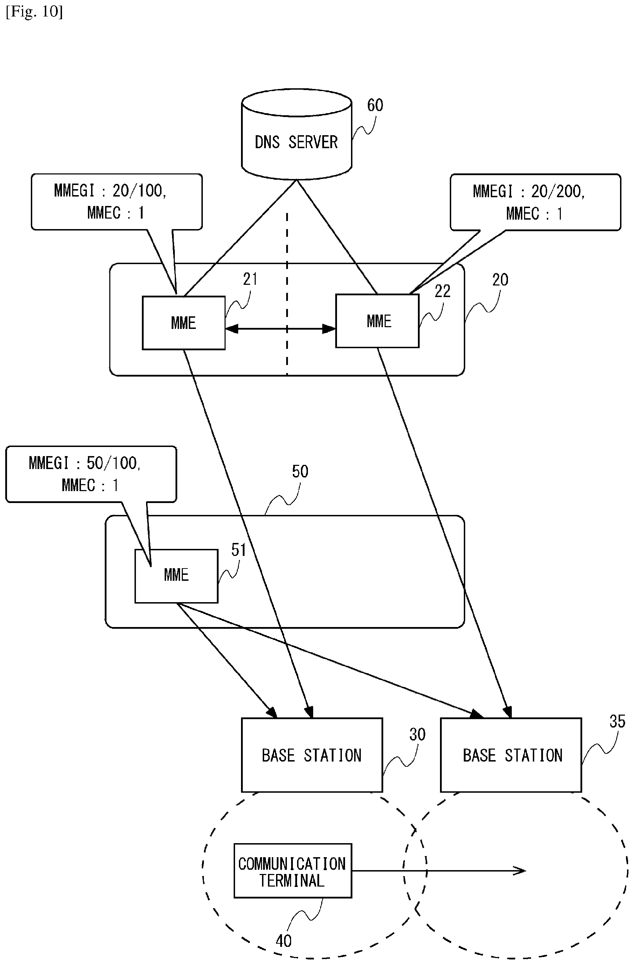

Next, a configuration example of a communication system according to a third exemplary embodiment of the present invention is explained with reference to Fig. 10. In this figure, a case where the communication terminal 40 performs handover involving a change of an MME is explained.

A communication system shown in Fig. 10 includes a core network system 20, a core network system 50, a base station 30, a base station 35, and a DNS (Domain Name System) server 60. The core network system 20 includes an MME 21 and an MME 22. Further, the core network system 50 includes an MME 51.

Further, Fig. 10 shows a state where the communication terminal 40 moves from a communication area formed by the base station 30 to a communication area formed by the base station 35. The communication terminal 40 moves while communicating with the base station 30 and thus performs handover.

A Service ID assigned to the MMEs 21 and 22 has a value 20. Further, the Pool ID of the MME 21 has a value 100 and the Pool ID of the MME 22 has a value 200. That is, the MMEs 21 and 22 are disposed in different regions. The Service ID of the MME 51 has a value 50 and its Pool ID has a value 100. The MME 51 manages a region corresponding to the combined regions of the MMEs 21 and 22.

Next, a connection configuration of the communication system shown in Fig. 10 is explained. The MME 21 manages the base station 30. That is, the MME 21 is connected to the base station 30. The MME 22 is connected to the base station 35. Further, the MME 51 is connected to the base stations 30 and 35. Further, the MMEs 21 and 22 is connected with the DNS server 60.

Each of the base stations 30 and 35 selects the core network system 20 or 50 as the destination of a connection request message according to a Service ID sent from the communication terminal 40.

Fig. 10 shows a state where the communication terminal 40 uses a value 20 as its Service ID and connects to the MME 21 through the base station 30. In the above-described state, the communication terminal 40 moves to the communication area formed by the base station 35. In this case, since the Service ID assigned to the MME 21 connected to the base station 30 has a value 20, the MME 22, to which the value 20 is assigned as its Service ID, serves as the MME that manages the base station 35 after the communication terminal 40 has moved. Therefore, when the communication terminal 40 is handed over, the MME to which the communication terminal 40 connects also changes from the MME 21 to the MME 22. Note that the MMEs to which the base station 35 connects includes the MME 51 in addition to the MME 22. However, since the communication terminal 40 had been connected to the MME 21 by using the value 20 as its Service ID before the handover, the MME to which the communication terminal 40 connects is changed to the MME 22 that has a Service ID having the same value as that of the MME 21.

The MME 22, which manages the base station 35 to which the communication terminal 40 has been handed over, acquires subscriber information of the communication terminal 40 from the MME 21. That is, the MME 21 transmits the subscriber information of the communication terminal 40 to the MME 22, which manages the base station 35 to which the communication terminal 40 has moved.

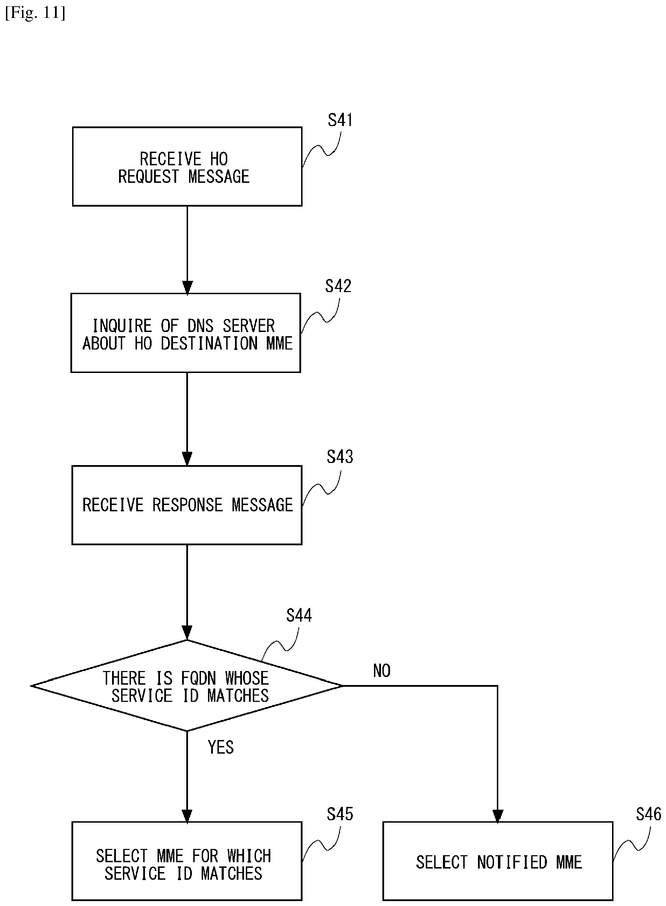

A flow of a process for selecting the MME 22 as the destination of the subscriber information performed by the MME 21 is explained hereinafter with reference to Fig. 11. Firstly, the MME 21 receives a handover (HO) request message relating to the communication terminal 40 from the base station 30 (S41). Next, the MME 21 transmits a message for inquiring the MME at the HO destination of the communication terminal 40 to the DNS server 60 (S42). For example, the MME 21 may transmit a message to the DNS server 60 in order to inquire the MME connected to the base station 35 to which the communication terminal 40 has moved. In this process, for example, the MME 21 may transmit area information of the base station 35 to the DNS server 60.

The DNS server 60 manages (or stores), for example, information of areas and MMEs managing those areas in a state where they are associated with each other. Note that the DNS server 60 manages MMEs by using FQDNs (Fully Qualified Domain Names). The DNS server 60 may also manage (or stores) Service IDs possessed by MMEs by incorporating those Service IDs into FQDNs. For example, since a value 20 is assigned to the MME 22 as a Service ID, the DNS server 60 may define the FQDN of the MME 22 as "sid20mmec1.epc...." and manages (or stores) the defined FQSN. Further, the DNS server 60 may define the FQDN of the MME 51 as "sid50mmec1.epc...." and manages (or stores) the defined FQSN.

In response to the message transmitted by the MME 21 for inquiring the MME at the HO destination by using the Service ID 20 assigned to the communication terminal 40 in the step S42, the MME 21 receives a response massage including "sid20mmec1.epc. ..." and "sid50mmec1.epc...." from the DNS server 60 (S43).

Next, the MME 21 determines whether or not there is an FQDN including a Service ID that matches the Service ID assigned to the MME 21 itself (S44). When the MME 21 determines that there is an FQDN including a Service ID that matches the Service ID assigned to the MME 21 itself, the MME 21 transmits subscriber information of the communication terminal 40 to the MME 22 in which an FQDN including the same Service ID as the Service ID assigned to the MME 21 itself is set (S45). When the MME 21 determines that there is no FQDN including a Service ID that matches the Service ID assigned to the MME 21 itself, the MME 21 selects one of the MMEs in which FQSNs notified from the DNS server 60 are set and transmits subscriber information of the communication terminal 40 to the selected MME (S46).

As explained above, by using the communication system according to the third exemplary embodiment of the present invention, even when the communication terminal performs handover involving a change of an MME, the former MME can transmit subscribe information of the communication terminal to the destination MME by using a service identifier.

Further, although an operation of the communication terminal 40 that is performed when the communication terminal 40 is handed over is explained in the third exemplary embodiment of the present invention, it is also possible to take over subscriber information between MMEs in a similar manner at the time of TAU (Tracking Area Update) of the communication terminal 40 involving a change of an MME. However, in the case of the TAU, the MME 22, which manages the base station 35 to which the communication terminal 40 moves, selects the MME 21, which manages the base station 30 from which the communication terminal 40 moves, and acquires subscriber information from the MME 21.

In this case, similarly to the processes explained above with reference to Figs. 10 and 11, the MME 22 transmits an inquiring message to the DNS server 60 and acquires information about the MME connected to the base station 30. The MME 22 selects the MME 21 by using a Service ID as in the case of the handover operation.

### (Fourth exemplary embodiment)

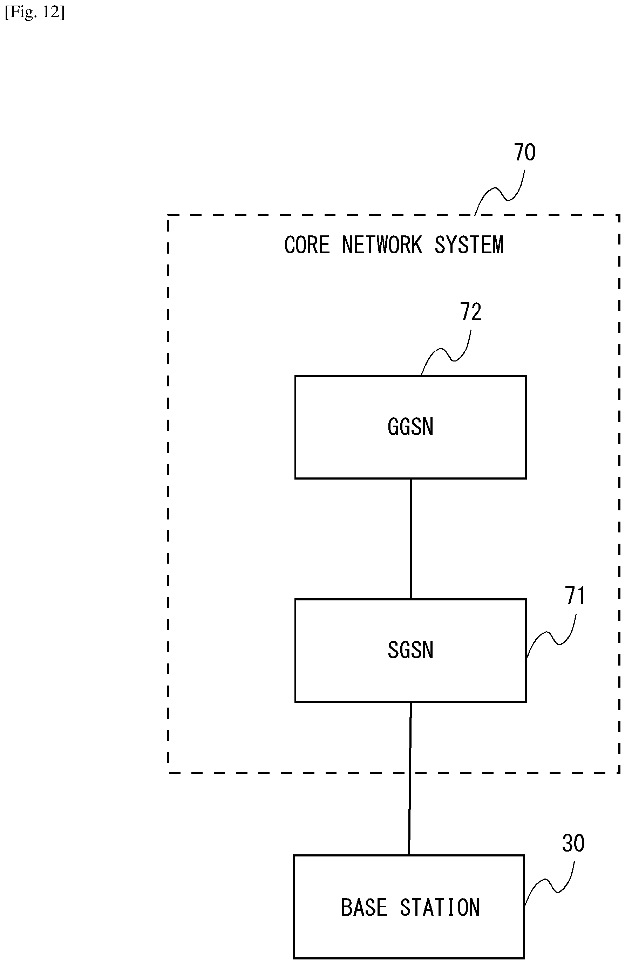

Next, a configuration example of a core network system 70 according to a fourth exemplary embodiment of the present invention is explained with reference to Fig. 12. The core network system 70 includes an SGSN (Serving GPRS Support Node) 71 and a GGSN (Gateway GPRS Support Node) 72. Each of the SGSN 71 and the GGSN 72 is a node device specified in the 3GPP. Each of the SGSN 71 and the GGSN 72 transmits/receives user data relating to the communication terminal 40 and also transmits/receives control data relating to the communication terminal 40.

The SGSN 71 is connected to the base station 30. That is, in contrast to the above-explained second and third exemplary embodiments in which the base station 30 selects an MME, the base station 30 selects the SGSN 71 in Fig. 12. Similarly to the first to third exemplary embodiments, the base station 30 selects the SGSN 71 by using a service identifier.

As explained above, by using the communication system shown in Fig. 12, the base station 30 can select the SGSN 71 by using a service identifier even in the so-called "second generation system" or "third generation system" including the SGSN 71 and the GGSN 72.

Although the present invention is described as a hardware configuration in the above-described exemplary embodiments, the present invention is not limited to the hardware configurations. In the present invention, the processes in the base station and the MME can be also implemented by causing a CPU (Central Processing Unit) to execute a computer program.

In the above-described examples, the program can be stored in various types of non-transitory computer readable media and thereby supplied to computers. The non-transitory computer readable media includes various types of tangible storage media. Examples of the non-transitory computer readable media include a magnetic recording medium (such as a flexible disk, a magnetic tape, and a hard disk drive), a magneto-optic recording medium (such as a magneto-optic disk), a CD-ROM (Read Only Memory), a CD-R, and a CD-R/W, and a semiconductor memory (such as a mask ROM, a PROM (Programmable ROM), an EPROM (Erasable PROM), a flash ROM, and a RAM (Random Access Memory)). Further, the program can be supplied to computers by using various types of transitory computer readable media. Examples of the transitory computer readable media include an electrical signal, an optical signal, and an electromagnetic wave. The transitory computer readable media can be used to supply programs to computer through a wire communication path such as an electrical wire and an optical fiber, or wireless communication path.

Note that the invention is not limited to the above-described exemplary embodiments and various changes may be made therein without departing from the spirit and scope of the present invention.

Although the present invention is explained above with reference to exemplary embodiments, the present invention is not limited to the above-described exemplary embodiments. Various modifications that can be understood by those skilled in the art can be made to the configuration and details of the present invention within the scope of the invention.

This application is based upon and claims the benefit of priority from Japanese patent applications No. 2013-202034, filed on September 27, 2013, the disclosure of which is incorporated herein in its entirety by reference.

### Reference Signs List

10 CORE NETWORK SYSTEM
11 SGW
12 PGW
13 MME
20 CORE NETWORK SYSTEM
21 MME
22 MME
30 BASE STATION
31 NW COMMUNICATION UNIT
32 SERVICE IDENTIFIER HOLDING UNIT
33 TERMINAL COMMUNICATION UNIT
34 DETERMINATION UNIT
35 BASE STATION
40 COMMUNICATION TERMINAL
50 CORE NETWORK SYSTEM
51 MME
60 DNS SERVER
70 CORE NETWORK SYSTEM
71 SGSN
72 GGSN

The present application also includes the following numbered clauses:
[Clause 1] A communication system comprising:
   a communication terminal;
   a node device that selects a gateway device that performs data communication with the communication terminal; and
   a base station that selects the node device based on an identifier included in a connection request message transmitted from the communication terminal.
[Clause 2] The communication system according to Clause 1, further comprising a core network system comprising the node device and the gateway device, wherein
   the core network system notifies the base station of an identifier indicating a corporate service that can be accommodated by the core network system itself, and
   the base station is shared by a plurality of core network systems, and when the connection request message is transmitted from the communication terminal, the base station transmits the connection request message to a core network system to which the communication terminal can connect based on an identifier included in the connection request message and an identifier transmitted from the core network system.
[Clause 3] The communication system according to Clause 2, wherein the plurality of core network systems comprises:
   a first core network system that allows a plurality of communication terminals possessed by a first user to connect thereto; and
   a second core network system that allows a plurality of communication terminals possessed by a second user to connect thereto.
[Clause 4] The communication system according to Clause 2 or 3, wherein the core network systems comprises a third core network system that allows a plurality of communication terminals possessed by a first user and a plurality of communication terminals possessed by a second user to connect thereto.
[Clause 5] The communication system according to any one of Clauses 2 to 4, wherein the base station transmits the connection request message to the core network system associated with the identifier included in the connection request message.
[Clause 6] The communication system according to any one of Clauses 2 to 5, further comprising a first base station that connects to a fourth core network system and a second base station that connects to a fifth core network system, wherein
   when the communication terminal possessed by a user who is allowed to connect to the fourth and fifth core network systems moves from the first base station to the second base station,
   the fifth core network system acquires information about the communication terminal possessed by the user from the fourth core network system.
[Clause 7] The communication system according to Clause 6, further comprising a DNS server that manages a domain name including the identifier in a state where the domain name is associated with the core network system, wherein
   when the communication terminal possessed by the user is handed over from the first base station to the second base station,
   the fourth core network system acquires a domain name of the fifth core network system associated with an identifier transmitted from the communication terminal from among a plurality of core network systems connected to the second base station by using the DNS server.
[Clause 8] The communication system according to Clause 6, further comprising a DNS server that manages a domain name including the identifier in a state where the domain name is associated with the core network system, wherein
   when the communication terminal possessed by the user moves from the first base station to the second base station in a state where the communication terminal is not communicating with the first base station, the fifth core network system acquires a domain name of the fourth core network system associated with an identifier transmitted from the communication terminal from among a plurality of core network systems connected to the first base station by using the DNS server.
[Clause 9] The communication system according to any one of Clauses 2 to 8, wherein the core network system comprises an MME or an SGSN specified in 3GPP.
[Clause 10] The communication system according to Clause 9, wherein the MME incorporates the identifier into an S1 SETUP RESPONSE message and transmits the S1 SETUP RESPONSE message including the identifier therein to the base station, the S1 SETUP RESPONSE message being a response signal to an S1 SETUP REQUEST message transmitted from the base station.
[Clause 11] The communication system according to Clause 9 or 10, wherein the identifier is set in a sub-field of an MMEGI field of a GUMMEI comprising an MCC field, an MNC field, the MMEGI field, and an MMEC field.
[Clause 12] A base station comprising:
   communication means for receiving a connection request message transmitted from a communication terminal; and
   determination means for selecting a node device from among a plurality of node devices based on an identifier included in the connection request message, the selected node device being to select a gateway device to which the communication terminal connects.
[Clause 13] The base station according to Clause 12, wherein
   the communication means communicates with a plurality of core network systems each comprising the node device and the gateway device,
   the communication means comprises service identifier holding means for holding an identifier transmitted from the plurality of core network systems through the communication means, the identifier indicating a corporate service that can be accommodated by the core network system, and
   when the connection request message is transmitted from the communication terminal, the communication means transmits the connection request message to a core network system to which the communication terminal can connect based on an identifier included in the connection request message and an identifier transmitted from the core network system.
[Clause 14] The base station according to Clause 13, wherein when the connection request message including the identifier is transmitted from the communication terminal, the communication means transmits the connection request message to the core network system associated with the identifier included in the connection request message.
[Clause 15] The base station according to Clause 13 or 14, wherein the core network system comprises an MME or an SGSN specified in 3GPP.
[Clause 16] The base station according to Clause 15 wherein the communication means transmits an S1 SETUP REQUEST message to the MME and receives an S1 SETUP RESPONSE message including the identifier.
[Clause 17] The base station according to Clause 15 or 16, wherein the identifier is set in a sub-field of an MMEGI field of a GUMMEI comprising an MCC field, an MNC field, the MMEGI field, and an MMEC field.
[Clause 18] A communication method comprising:
   receiving a connection request message transmitted from a communication terminal; and
   selecting a node device from among a plurality of node devices based on an identifier included in the connection request message, the selected node device being to select a gateway device to which the communication terminal connects.
[Clause 19] A non-transitory computer readable medium storing a program that causes a computer to execute:
   receiving a connection request message transmitted from a communication terminal; and
   selecting a node device from among a plurality of node devices based on an identifier included in the connection request message, the selected node device being to select a gateway device to which the communication terminal connects.

## Claims

1. A system comprising:
a core network node;
a terminal;
a radio access network node; wherein
the core network node is configured to:
provide, to the radio access network node, a first identifier identifying a Dedicated Core Network,
the terminal is configured to:
provide, to the radio access network node, a second identifier identifying a Dedicated Core Network, and
the radio access network node is configured to:
select a core network node based on the first identifier and the second identifier.

2. A radio access network node comprising a processor configured to process to:
receive, from a core network node, a first identifier identifying a Dedicated Core Network,
receive, from a terminal, a second identifier identifying a Dedicated Core Network, and
select a core network node based on the first identifier and the second identifier.

3. A core network node comprising a processor configured to process to:
provide, to a radio access network node, a first identifier identifying a Dedicated Core Network so that the radio access network node receives, from a terminal, a second identifier identifying a Dedicated Core Network, and
selects a core network node based on the first identifier and the second identifier.

4. A terminal comprising a processor configured to process to:
provide, to a radio access network node, a second identifier identifying a Dedicated Core Network so that the radio access network node receives, from a core network node, a first identifier identifying a Dedicated Core Network, and selects a core network node based on the first identifier and the second identifier.

5. A method comprising:
receiving, from a core network node, a first identifier identifying a Dedicated Core Network,
receiving, from a terminal, a second identifier identifying a Dedicated Core Network, and
selecting a core network node based on the first identifier and the second identifier.

6. A method comprising:
providing, to a radio access network node, a first identifier identifying a Dedicated Core Network so that the radio access network node receives, from a terminal, a second identifier identifying a Dedicated Core Network, and
selects a core network node based on the first identifier and the second identifier.

7. A method comprising:
providing, to a radio access network node, a second identifier identifying a Dedicated Core Network so that the radio access network node receives, from a core network node, a first identifier identifying a Dedicated Core Network, and selects a core network node based on the first identifier and the second identifier.
